# DEMANDE DE BREVET EUROPEEN

(11) **EP 4 124 376 A1**
(43) Date de publication de la demande: **01.02.2023**
(21) Numéro de dépôt: 22186055.4
(22) Date de dépôt: 20.07.2022
(51) Int. Cl.: B01D 53/22, C01B 3/50

(54) **PROCÉDÉ ET APPAREIL DE SÉPARATION MEMBRANAIRE D'UN MÉLANGE CONTENANT COMME COMPOSANTS PRINCIPAUX DE L HYDROGÈNE ET DU DIOXYDE DE CARBONE**

(30) Priorité: 26.07.2021 FR 2108056
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: LECLERC, Mathieu, 94503 CHAMPIGNY SUR MARNE (FR); PERE, Félix, 94503 CHAMPIGNY SUR MARNE (FR)
(74) Mandataire: Air Liquide

(57) **Abrégé**

Un procédé de séparation membranaire d'un mélange contenant comme composants principaux, voire majoritairement, de l'hydrogène et du dioxyde de carbone ainsi qu'au moins un autre composant, par exemple choisi dans le groupe suivant : monoxyde de carbone, méthane, azote comprend :chauffage du mélange (1) dans un échangeur de chaleur (E), perméation du mélange réchauffé dans une première unité de séparation membranaire (M1) permettant d'obtenir un premier perméat (7) enrichi en hydrogène et dioxyde de carbone par rapport au mélange et un premier résidu (9) appauvri en hydrogène et dioxyde de carbone, perméation du premier résidu dans une deuxième unité de séparation membranaire (M2) permettant d'obtenir un deuxième résidu (13), au moins une partie (7) du premier perméat est comprimée dans un surpresseur (C) et le deuxième résidu (13) est détendu dans une turbine (T) et le surpresseur étant entraîné par la turbine.

## Description

La présente invention est relative à un procédé et à un appareil de séparation membranaire d'un mélange contenant comme composants principaux, voire majoritairement, de l'hydrogène et du dioxyde de carbone.

Les procédés de capture de CO2 par voie cryogénique traitant des gaz, provenant d'unités de production d'hydrogène comprenant une unité de séparation d'hydrogène par adsorption avec bascule de pression (« Pressure Swing Adsorption » ou PSA), sont parfois combinés à une séparation membranaire. Celle-ci permet de récupérer l'hydrogène contenu dans le gaz traité et de le recycler au PSA produisant l'hydrogène. Le gaz résiduaire passe dans une seconde unité de séparation membranaire afin de récupérer l'hydrogène et le CO2 restant qui sont recyclés dans la compression en amont de la séparation cryogénique.

Ici le mot « cryogénique » décrit des températures en dessous de 0°C.

Le gaz résiduaire obtenu encore sous pression est détendu et sert le plus souvent de gaz de régénération pour le sécheur en amont de la séparation cryogénique. Cette détente est faite dans une vanne, l'installation d'une turbine reliée à une génératrice pouvant s'avérer prohibitive lorsque l'électricité est à bas coût.

WO12064938, WO12064941 et WO12158673 mentionnent le réchauffage du gaz résiduaire de la séparation cryogénique dans un échangeur de chaleur avant envoi dans une première unité de séparation membranaire. Le perméat est comprimé dans un surpresseur. Le résidu est quant à lui envoyé dans une deuxième unité de séparation membranaire. Son perméat passe à travers l'échangeur de chaleur avant recyclage à la machine en amont de la séparation cryogénique. Le résidu passe aussi à travers l'échangeur de chaleur et est détendu dans une turbine.

L'invention permet de valoriser l'énergie perdue lors de la détente du résidu des unités de séparation membranaires sous forme d'énergie de compression qui permet l'optimisation du procédé de séparation membranaire. Ainsi le procédé est plus efficace énergétiquement et/ou permet d'obtenir des rendements de capture de CO2 et de production d'hydrogène plus élevés.

Selon un objet de l'invention, il est prévu un procédé de séparation membranaire d'un mélange contenant comme composants principaux, voire majoritairement, de l'hydrogène et du dioxyde de carbone ainsi qu'au moins un autre composant, par exemple choisi dans le groupe suivant : monoxyde de carbone, méthane, azote comprenant les étapes suivantes :
i) Chauffage du mélange dans un échangeur de chaleur jusqu'à une première température
ii) Perméation du mélange réchauffé à la première température dans une première unité de séparation membranaire permettant d'obtenir un premier perméat enrichi en hydrogène et dioxyde de carbone par rapport au mélange et un premier résidu appauvri en hydrogène et dioxyde de carbone par rapport au mélange
iii) Refroidissement d'au moins une partie du premier perméat dans l'échangeur de chaleur
iv) Perméation du premier résidu dans une deuxième unité de séparation membranaire permettant d'obtenir un deuxième perméat et un deuxième résidu appauvri en hydrogène et dioxyde de carbone par rapport au deuxième perméat et
v) Au moins une partie du premier perméat, refroidie dans l'échangeur de chaleur, est comprimée dans un surpresseur, le deuxième résidu est détendu dans une turbine et le surpresseur est entraîné par la turbine.

Selon d'autres aspects facultatifs qui peuvent être combinés entre eux de toute manière compatible avec la logique et la science :
- au moins une partie du premier perméat comprimé dans le surpresseur est envoyée à une unité de séparation par adsorption à bascule de pression pour en extraire l'hydrogène.
- l'au moins une partie du premier perméat comprimé dans le surpresseur est refroidie dans l'échangeur de chaleur avant d'être envoyé à l'unité de séparation par adsorption.
- le mélange est réchauffé dans au moins un échangeur uniquement par au moins un débit produit par la séparation membranaire voire par la première unité de séparation membranaire.
- l'échangeur de chaleur a une première extrémité et une deuxième extrémité, la deuxième extrémité étant plus froide que la première et dans lequel l'au moins une partie du premier perméat est refroidie jusqu'à la deuxième extrémité avant d'être envoyé au surpresseur.
- la température d'entrée de la turbine est substantiellement égale à la température à laquelle le deuxième résidu sort de la deuxième unité de séparation membranaire.
- le mélange réchauffé rentre dans la première unité de séparation membranaire à une température substantiellement égale à la température à laquelle il sort de l'échangeur de chaleur.
- une partie variable du mélange n'est pas réchauffée dans l'échangeur de chaleur et se mélange avec le mélange réchauffé en amont de la première unité de séparation membranaire.
- on envoie au moins une partie du perméat de la première unité de séparation membranaire directement à la turbine sans passer par l'échangeur de chaleur et/ou sans l'avoir refroidie.
- on envoie au moins une partie variable du perméat de la première unité de séparation membranaire directement à la turbine sans passer par l'échangeur de chaleur.
- on envoie seulement une partie du premier perméat comprimé dans le surpresseur à l'échangeur de chaleur.
- le procédé comprenant une étape de séparation opérant à une température en dessous de 0°C par distillation et/ou par condensation partielle pour produire le mélange à séparer et dans lequel le froid produit par la détente dans la turbine est utilisé dans l'unité de séparation opérant à une température en dessous de 0°C ou dans un cycle de réfrigération.
- le procédé comprenant une étape de séparation opérant à une température en dessous de 0°C par distillation et/ou par condensation partielle pour séparer un gaz comprimé dans un surpresseur et pour produire le mélange à séparer dans lequel une partie du deuxième perméat est envoyée au surpresseur du gaz, de préférence sans avoir été refroidie dans l'échangeur de chaleur.
- le mélange provient d'une unité d'adsorption de type PSA produisant un débit enrichi en hydrogène et un débit appauvri en hydrogène.
- le débit appauvri en hydrogène est séparé, par exemple par distillation et/ou condensation partielle, pour former le mélange.
- au moins une partie du gaz surpressé dans le surpresseur est envoyée à l'unité d'adsorption de type PSA, de préférence substantiellement à la pression de sortie du surpresseur.
- il n'y a pas de machine de compression du premier perméat autre que le surpresseur en amont de l'unité d'adsorption.
- le deuxième perméat est plus riche en hydrogène et/ou en dioxyde de carbone que le premier perméat.
- le deuxième résidu est moins riche en hydrogène et/ou en dioxyde de carbone que le premier résidu.
- le deuxième perméat est plus pauvre en hydrogène et/ou en dioxyde de carbone que le premier perméat.
- le deuxième résidu est moins pauvre en hydrogène et/ou en dioxyde de carbone que le premier résidu.
- au moins une partie du premier perméat est refroidie au moins partiellement dans l'échangeur de chaleur avant d'être envoyée au surpresseur.
- le gaz comprimé dans le compresseur est un gaz résiduaire d'une unité de séparation d'hydrogène par adsorption avec bascule de pression.

Selon un autre aspect de l'invention, il est prévu un appareil de séparation d'un mélange contenant comme composants principaux, voire majoritairement, de l'hydrogène et du dioxyde de carbone ainsi qu'au moins un autre composant, par exemple choisi dans le groupe suivant : monoxyde de carbone, méthane, azote comprenant :
a) une unité de séparation opérant à une température en dessous de 0°C par distillation et/ou par condensation partielle pour produire le mélange à séparer
b) Un échangeur de chaleur et des moyens pour envoyer le mélange se chauffer dans l'échangeur de chaleur jusqu'à une première température
c) Une première unité de séparation membranaire et des moyens pour envoyer le mélange réchauffé à la première température dans la première unité de séparation membranaire afin d'obtenir un premier perméat enrichi en hydrogène et dioxyde de carbone par rapport au mélange et un premier résidu appauvri en hydrogène et dioxyde de carbone par rapport au mélange
d) Au moins une conduite pour envoyer au moins une partie du premier perméat se refroidir dans l'échangeur de chaleur
e) Une deuxième unité de séparation membranaire, une conduite pour envoyer le premier résidu dans la deuxième unité de séparation membranaire permettant d'obtenir un deuxième perméat et un deuxième résidu appauvri en hydrogène et dioxyde de carbone par rapport au deuxième perméat et
f) Un surpresseur, des moyens reliés à l'échangeur de chaleur pour envoyer au moins une partie du premier perméat, refroidie dans l'échangeur de chaleur, dans le surpresseur pour être comprimé, éventuellement des moyens pour envoyer du premier perméat comprimé se refroidir dans l'échangeur de chaleur, une turbine, des moyens pour envoyer le deuxième résidu se détendre dans la turbine et le surpresseur est couplé par la turbine pour en être entraîné.

L'invention comprend au moins une des étapes suivantes :
- Réchauffer le gaz à traiter à travers l'échangeur de chaleur
- Faire passer le gaz réchauffé dans une première unité de séparation membranaire, potentiellement sans chauffage additionnel après le chauffage dans l'échangeur de chaleur, dont le perméat est à une pression inférieure à celle de l'entrée du PSA
- Eventuellement refroidir au moins une partie du perméat à travers l'échangeur de chaleur
- Comprimer le perméat dans un ou plusieurs surpresseur(s) pour atteindre une pression suffisante pour le recycler en amont du PSA
- Refroidir le gaz en sortie du surpresseur dans l'échangeur de chaleur avant recyclage en amont du PSA
- Faire passer le résidu de la première unité de séparation membranaire dans une seconde unité de séparation membranaire, le perméat étant recyclé dans la compression en amont de la séparation cryogénique (avec ou sans refroidissement préliminaire dans l'échangeur de chaleur)
- Détendre le résidu sous pression et chaud dans une ou plusieurs turbine(s) qui entraîne(nt) le surpresseur.

Plusieurs variantes sont envisageables :
- Absence de réchauffeur supplémentaire, la chaleur pour préchauffer le gaz à traiter étant intégralement fournie par le surpresseur. Pour ce faire, des moyens de court-circuitage de l'échangeur de chaleur peuvent être nécessaires afin de pouvoir réguler la température et les calories transférées. On va s'assurer que la température en entrée du surpresseur est suffisamment élevée en ne refroidissant pas la totalité du perméat de la première unité de séparation membranaire avant sa compression. On ne va pas nécessairement refroidir tout le perméat comprimé dans le cas où les calories apportées sont trop importantes.

- Détente dans la turbine afin d'obtenir des températures basses permettant de produire du froid utilisé dans la séparation cryogénique ou dans un cycle de réfrigération
- Recyclage au surpresseur en amont de la séparation cryogénique du second perméat chaud sans refroidissement dans l'échangeur de chaleur.

Cette disposition permet de baisser significativement la pression du premier perméat tout en pouvant toujours le recycler au PSA grâce au surpresseur. La réduction de pression est de l'ordre d'un rapport d'au plus 2, voire d'au plus 1, 7. De ce fait, pour un rendement hydrogène et/ou CO2 équivalent, moins d'unités de séparation membranaires peuvent être utilisées.

Mais mieux encore, du fait de la pression plus basse, le rapport de pressions à travers l'unité de séparation membranaire est augmenté, ce qui permet une meilleure efficacité de séparation. Ainsi, on peut laisser le nombre d'unités de séparation membranaires constant voire même en ajouter un nombre modéré afin d'obtenir des rendements bien plus élevés, en CO2 notamment. Le rapport de pressions dans l'unité de séparation membranaire est entre 2,3 et 3,6. En d'autres termes, l'augmentation de rendement se fait à coûts plus modérés que s'il avait fallu le faire avec une pression de perméat plus haute.

L'augmentation d'efficacité de séparation permet d'obtenir aussi une meilleure sélectivité, limitant ainsi l'énergie de recompression des perméats car ceux-ci sont moins concentrés en impuretés.

L'invention sera décrite de manière plus détaillée en se référant aux figures :
[FIG.1] représente un schéma d'un procédé comparatif.
[FIG.2] représente une variante de la [FIG.1] selon l'invention.

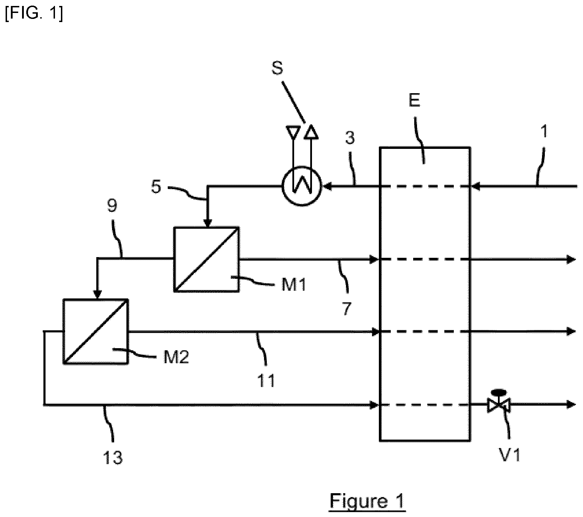

Dans la [FIG.1], un mélange gazeux 1 contenant comme composants principaux, voire majoritairement, de l'hydrogène et du dioxyde de carbone ainsi qu'au moins un autre composant, par exemple choisi dans le groupe suivant : monoxyde de carbone, méthane, azote, est réchauffé dans un échangeur de chaleur E par échange de chaleur indirect avec trois débits séparés par le procédé de séparation, de préférence uniquement avec ces trois débits.

Le mélange 1 provient de préférence d'une unité d'adsorption de type PSA produisant un débit enrichi en hydrogène et un débit qui est séparé pour former le mélange.

Le débit réchauffé 3 est réchauffé encore plus dans un réchauffeur, chauffé par exemple par de la vapeur d'eau S. Le débit 5 réchauffé par le réchauffeur est envoyé se séparer dans une première unité de séparation membranaire M1. Cette séparation produit un premier perméat 7 enrichi en hydrogène et en dioxyde de carbone par rapport au mélange et appauvri en l'au moins un autre composant par rapport au mélange et un premier résidu 9 appauvri en hydrogène et en dioxyde de carbone par rapport au mélange et enrichi en l'au moins un autre composant par rapport au mélange. Le premier perméat 7 se refroidit dans l'échangeur de chaleur E pour être envoyé au PSA. Le premier résidu 9 est envoyé à une deuxième unité de séparation membranaire M2 pour produire un deuxième perméat 11 enrichi en hydrogène et en dioxyde de carbone et appauvri en l'au moins un autre composant et un deuxième résidu 13 appauvri en hydrogène et en dioxyde de carbone et enrichi en l'au moins un autre composant. Le deuxième perméat 11 est ici plus riche en hydrogène et/ou en dioxyde de carbone que le premier perméat 7 et le deuxième résidu 13 est moins riche en hydrogène et/ou en dioxyde de carbone que le premier résidu 9. Sinon le deuxième perméat 11 peut être plus pauvre en hydrogène et/ou en dioxyde de carbone que le premier perméat 7 et le deuxième résidu 13 est plus riche en hydrogène et/ou en dioxyde de carbone que le premier résidu 9.

Le deuxième perméat 11 est plus riche en hydrogène et en dioxyde de carbone que le deuxième résidu 13.

Le deuxième perméat 11 se refroidit dans l'échangeur de chaleur E et est envoyé à un compresseur. Ce compresseur peut par exemple comprimer un débit destiné à être séparé par séparation à basse température (distillation et/ou condensation partielle) pour produire le gaz 1.

Le deuxième résidu 13 est détendu, et peut être utilisé pour régénérer un sécheur puis est éventuellement envoyé comme combustible dans une unité de production d'hydrogène, par exemple en amont de l'unité d'adsorption.

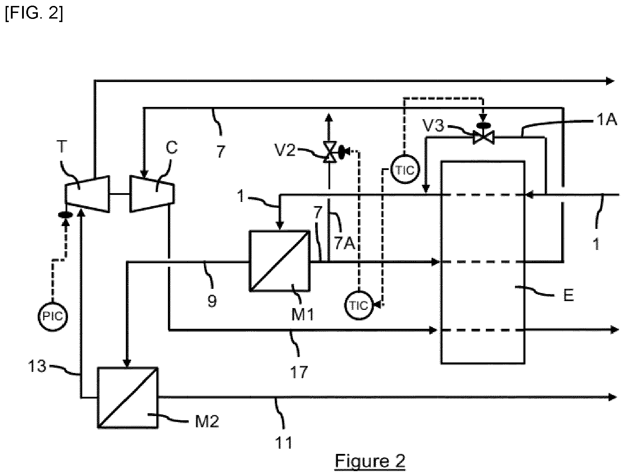

Dans la [FIG.2], un mélange gazeux 1 contenant comme composants principaux, voire majoritairement, de l'hydrogène et du dioxyde de carbone ainsi qu'au moins un autre composant, par exemple choisi dans le groupe suivant : monoxyde de carbone, méthane, azote, est réchauffé dans un échangeur de chaleur E par échange de chaleur indirect avec deux débits séparés par le procédé de séparation, de préférence uniquement avec ces deux débits.

Le mélange 1 provient de préférence d'une unité d'adsorption de type PSA produisant un débit enrichi en hydrogène et un débit qui est séparé par distillation et/ou condensation partielle pour former le mélange 1.

Le débit réchauffé 1 est envoyé se séparer dans une première unité de séparation membranaire M1. Cette séparation produit un premier perméat 7 enrichi en hydrogène et en dioxyde de carbone et appauvri en au moins un autre composant et un premier résidu 9 appauvri en hydrogène et en dioxyde de carbone et enrichi en l'au moins un autre composant. Au moins une partie du premier perméat 7 (ici le premier perméat en entier) est envoyé à un surpresseur C. En option, au moins une partie du premier perméat se refroidit dans l'échangeur de chaleur E en amont du surpresseur C. Le débit surpressé 17 est refroidi dans l'échangeur E.

Le premier résidu 9 est envoyé à une deuxième unité de séparation membranaire M2 pour produire un deuxième perméat 11 enrichi en hydrogène et en dioxyde de carbone et appauvri en l'au moins un autre composant et un deuxième résidu 13 appauvri en hydrogène et en dioxyde de carbone et enrichi en l'au moins un autre composant.

Le deuxième perméat 11 peut être plus riche en hydrogène et/ou en dioxyde de carbone que le premier perméat 7 et le deuxième résidu 13 peut être moins riche en hydrogène et/ou en dioxyde de carbone que le premier résidu 9. Sinon le deuxième perméat 11 peut être plus pauvre en hydrogène et/ou en dioxyde de carbone que le premier perméat 7 et le deuxième résidu 13 peut être moins pauvre en hydrogène et/ou en dioxyde de carbone que le premier résidu 9.

Le deuxième perméat 11 est plus riche en hydrogène et en dioxyde de carbone que le deuxième résidu 13.

Le deuxième perméat 11 est envoyé à un compresseur d'un débit dont est dérivé le gaz 1 par séparation à basse température (distillation et/ou condensation partielle). Le deuxième résidu 13 est envoyé à une turbine T couplée au surpresseur C. Le débit détendu dans la turbine n'est pas refroidi ici dans l'échangeur E.

Le deuxième résidu 13 détendu dans la turbine peut être utilisé pour régénérer un sécheur et/ou envoyé comme combustible à une unité de production d'hydrogène, par exemple un reformeur, par exemple en amont de l'unité d'adsorption.

On note l'absence de tout réchauffeur entre le bout chaud de l'échangeur E et l'entrée de l'unité de séparation M1.

Un tel réchauffeur peut toutefois être présent.

Il existe une conduite de court-circuitage 1A permettant d'envoyer une partie du débit 1 du bout froid au bout chaud de l'échangeur E sans passer par l'échangeur de chaleur E et ainsi d'arriver à l'unité 1 sans avoir été réchauffé.

Cette conduite 1A est munie d'une vanne V3 régulée par la température d'entrée du gaz 1 dans l'unité M1.

II existe également une conduite de court-circuitage 7A entre la sortie du perméat 7 de l'unité M1 et l'entrée du surpresseur C, cette conduite étant munie d'une vanne V2 régulée par la température de sortie du surpresseur C et par la température d'entrée du gaz 1 dans l'unité.

On peut envoyer seulement une partie du premier perméat comprimé dans le surpresseur C à l'échangeur de chaleur E.

Au moins une partie du premier perméat 17 comprimé dans le surpresseur C peut être envoyée à une unité d'adsorption par bascule de pression pour être séparé et en extraire l'hydrogène, de préférence à substantiellement la pression de sortie du surpresseur C.

L'appareil peut comprendre en amont de la partie de séparation membranaire une unité de séparation opérant à une température en dessous de 0°C par distillation et/ou par condensation partielle pour produire le mélange à séparer dans la partie de séparation membranaire. Dans ce cas, le froid produit par la détente dans la turbine T peut être utilisé dans l'unité de séparation opérant à une température en dessous de 0°C ou dans un cycle de réfrigération.

Une partie du deuxième perméat 11 peut être envoyée au compresseur de l'unité de séparation à basse température.

Dans les deux exemples, l'échangeur de chaleur E peut être divisé en une pluralité d'échangeurs de chaleur.

## Revendications

1. Procédé de séparation membranaire d'un mélange contenant comme composants principaux, voire majoritairement, de l'hydrogène et du dioxyde de carbone ainsi qu'au moins un autre composant, par exemple choisi dans le groupe suivant : monoxyde de carbone, méthane, azote comprenant les étapes suivantes :
i) Chauffage du mélange (1) dans un échangeur de chaleur (E) jusqu'à une première température
ii) Perméation du mélange réchauffé à la première température dans une première unité de séparation membranaire (M1) permettant d'obtenir un premier perméat (7) enrichi en hydrogène et dioxyde de carbone par rapport au mélange et un premier résidu (9) appauvri en hydrogène et dioxyde de carbone par rapport au mélange
iii) Refroidissement d'au moins une partie du premier perméat dans l'échangeur de chaleur
iv) Perméation du premier résidu dans une deuxième unité de séparation membranaire (M2) permettant d'obtenir un deuxième perméat (11) et un deuxième résidu (13) appauvri en hydrogène et dioxyde de carbone par rapport au deuxième perméat et
v) Au moins une partie (7) du premier perméat, refroidie dans l'échangeur de chaleur, est comprimée dans un surpresseur (C), le deuxième résidu (13) est détendu dans une turbine (T) et le surpresseur est entraîné par la turbine.

2. Procédé selon la revendication 1 dans lequel au moins une partie (17) du premier perméat comprimé dans le surpresseur (C) est envoyée à une unité de séparation par adsorption à bascule de pression pour en extraire l'hydrogène.

3. Procédé selon la revendication 2 dans lequel l'au moins une partie du premier perméat comprimé dans le surpresseur est refroidie dans l'échangeur de chaleur (E) avant d'être envoyé à l'unité de séparation par adsorption.

4. Procédé selon la revendication 1, 2 ou 3 dans lequel le mélange (1) est réchauffé dans l'échangeur (E) uniquement par au moins un débit (7,11,17) produit par la séparation membranaire, voire par la première unité de séparation membranaire (M1).

5. Procédé selon l'une des revendications précédentes dans lequel l'échangeur de chaleur (E) a une première extrémité et une deuxième extrémité, la deuxième extrémité étant plus froide que la première et dans lequel l'au moins une partie (7) du premier perméat est refroidie jusqu'à la deuxième extrémité avant d'être envoyée au surpresseur.

6. Procédé selon l'une des revendications précédentes dans lequel la température d'entrée de la turbine (T) est substantiellement égale à la température à laquelle le deuxième résidu (13) sort de la deuxième unité de séparation membranaire (M2).

7. Procédé selon l'une des revendications précédentes dans lequel le mélange réchauffé (1) rentre dans la première unité de séparation membranaire (M1) à une température substantiellement égale à la température à laquelle il sort de l'échangeur de chaleur (E).

8. Procédé selon l'une des revendications précédentes dans lequel une partie variable (1A) du mélange n'est pas réchauffée dans l'échangeur de chaleur (E) et se mélange avec le mélange réchauffé (1) en amont de la première unité de séparation membranaire (M1).

9. Procédé selon la revendication 8 dans lequel on envoie au moins une partie variable (7A) du premier perméat de la première unité de séparation membranaire directement au surpresseur (C) sans passer par l'échangeur de chaleur.

10. Procédé selon la revendication 7, 8 ou 9 dans lequel on envoie seulement une partie du premier perméat comprimé (17) dans le surpresseur (C) à l'échangeur de chaleur.

11. Procédé selon l'une des revendications précédentes comprenant une étape de séparation opérant à une température en dessous de 0°C par distillation et/ou par condensation partielle pour produire le mélange à séparer et dans lequel le froid produit par la détente dans la turbine (T) est utilisé dans l'unité de séparation opérant à une température en dessous de 0°C ou dans un cycle de réfrigération.

12. Procédé selon l'une des revendications précédentes comprenant une étape de séparation opérant à une température en dessous de 0°C par distillation et/ou par condensation partielle pour séparer un gaz comprimé dans un compresseur et pour produire le mélange à séparer (1).

13. Procédé selon la revendication 12 dans lequel au moins une partie du deuxième perméat (11) est envoyée au compresseur du gaz, de préférence sans avoir été refroidie dans l'échangeur de chaleur (E).

14. Procédé selon l'une des revendications 12 ou 13 dans lequel le gaz comprimé dans le compresseur est un gaz résiduaire d'une unité de séparation d'hydrogène par adsorption avec bascule de pression.

15. Appareil de séparation d'un mélange (1) contenant comme composants principaux, voire majoritairement, de l'hydrogène et du dioxyde de carbone ainsi qu'au moins un autre composant, par exemple choisi dans le groupe suivant : monoxyde de carbone, méthane, azote comprenant :
a) une unité de séparation opérant à une température en dessous de 0°C par distillation et/ou par condensation partielle pour produire le mélange à séparer
b) Un échangeur de chaleur (E) et des moyens pour envoyer le mélange se chauffer dans l'échangeur de chaleur jusqu'à une première température
c) Une première unité de séparation membranaire (M1) et des moyens pour envoyer le mélange réchauffé à la première température dans la première unité de séparation membranaire afin d'obtenir un premier perméat (7) enrichi en hydrogène et dioxyde de carbone et un premier résidu (9) appauvri en hydrogène et dioxyde de carbone
d) Au moins une conduite pour envoyer au moins une partie du premier perméat se refroidir dans l'échangeur de chaleur
e) Une deuxième unité de séparation membranaire (M2), une conduite pour envoyer le premier résidu dans la deuxième unité de séparation membranaire permettant d'obtenir un deuxième perméat (11) et un deuxième résidu (13) appauvri en hydrogène et dioxyde de carbone par rapport au deuxième perméat et
f) Un surpresseur (C), des moyens reliés à l'échangeur de chaleur pour envoyer au moins une partie (7) du premier perméat, refroidie dans l'échangeur de chaleur, dans le surpresseur pour être comprimée, éventuellement des moyens pour envoyer du premier perméat comprimé se refroidir dans l'échangeur de chaleur, une turbine (T), des moyens pour envoyer le deuxième résidu se détendre dans la turbine et le surpresseur étant couplé par la turbine pour en être entraîné.
